# EUROPÄISCHE PATENTSCHRIFT

(11) **EP 1 399 723 B1**
(45) Veröffentlichungstag und Bekanntmachung des Hinweises auf die Patenterteilung: **06.01.2010**
(21) Anmeldenummer: 02760188.9
(22) Anmeldetag: 19.06.2002
(51) Int. Cl.: G01L 19/06, G01M 3/16

(54) **DRUCKÜBERTRAGUNGSVORRICHTUNG MIT VORAUSSCHAUENDER KORROSIONSÜBERWACHUNG**
PRESSURE TRANSMITTING DEVICE WITH FORECASTING CORROSION MONITORING
DISPOSITIF DE TRANSMISSION DE PRESSION AVEC SURVEILLANCE PREVISIONNELLE DE LA CORROSION

(30) Priorität: 28.06.2001 DE 10131405
(43) Veröffentlichungstag der Anmeldung: 24.03.2004
(73) Patentinhaber: Endress + Hauser GmbH + Co. KG, 79689 Maulburg (DE)
(72) Erfinder: TEXTOR, Olaf, 79650 Schopfheim (DE)
(74) Vertreter: Andres, Angelika Maria
(86) Internationale Anmeldenummer: PCT/EP2002/006736
(87) Internationale Veröffentlichungsnummer: WO 2003/002969

(56) Entgegenhaltungen:
- EP-A- 0 838 672
- EP-A- 1 087 219
- US-A- 4 569 634
- US-A- 5 215 644
- PATENT ABSTRACTS OF JAPAN vol. 010, no. 386 (E-467), 24. Dezember 1986 (1986-12-24) & JP 61 177783 A (NISSAN MOTOR CO LTD), 9. August 1986 (1986-08-09)

## Beschreibung

Die Erfindung bezieht sich auf eine Vorrichtung zur Übertragung eines Drucks von einem in einem ersten Medium vorherrschenden Druck auf ein zweites Medium.

Genauer betrifft die Erfindung Vorrichtungen mit
- einem Grundkörper;
- einer Trennmembran, die mit ihrem Rand an dem Grundkörper befestigt ist, wobei die Trennmembran mit ihrer ersten, dem Grundkörper abgewandten Oberfläche mit dem ersten Medium in Kontakt gebracht werden kann, und mit ihrer zweiten, dem Grundkörper zugewandten Oberfläche und dem Grundkörper eine Druckkammer bildet, die mit dem zweiten Medium befüllbar ist; und
- einem Sensor, zur Feststellung eines Membranbruchs.
   Die gattungsgemäßen Vorrichtungen werden unter anderem bei der Druckmessung in aggressiven Medien eingesetzt, wobei die Trennmembran mit einem aggressiven ersten Medium beaufschlagt wird und den im ersten Medium vorherrschenden Druck auf ein zweites Medium in der Druckkammer überträgt, der entweder unmittelbar oder über eine geeignete Druckzuleitung einer Druckmeßzelle zugeführt wird.
   Zur Druckübertragung wird als zweites Medium vorzugsweise eine inkompressible Hydraulikflüssigkeit, insbesondere ein Hydrauliköl, verwendet. Insofern als eine solche Substanz geeignet ist, ein Meßmedium zu kontaminieren, ist es erforderlich, ein Leck in der Trennmembran oder einen Bruch der Trennmembran frühzeitig zu erkennen. Hierzu offenbart Bastiaan in der Europäische Patentanmeldung EP 0 838 672 einen Druckmittler, bei dem die Druckkammer in ihrer Wandung ein Sackloch aufweist, in dem die Elektrode eines Leitfähigkeitssensors angeordnet ist. Wenn nun die Trennmembran bricht, diffundiert das erste Medium in die Druckkammer und in das Sackloch, woraufhin eine Veränderung der Leitfähigkeit nachweisbar ist, falls das erste Medium eine Leitfähigkeit aufweist, die wesentlich von der des zweiten Mediums abweicht. Dies ist insbesondere dann der Fall, wenn daß erste Medium ein wäßriges Medium und das zweite Medium ein Hydrauliköl, insbesondere auf Silikonbasis ist.
   Die beschriebene Vorrichtung hat jedoch den Nachteil, daß Sie ein Versagen der Vorrichtung erst dann feststellt, wenn der Membranbruch bereits aufgetreten ist, und dann ohne jegliche Vorwarnzeit ein Austausch des Sensors erforderlich ist, was häufig mit inakzeptablen Ausfallzeiten für die Anlagen einhergeht. Um dies zu vermeiden, müssen Druckmittler bei Routinewartungen nach einer theoretisch maximalen Lebenszeit mit entsprechenden Sicherheitsreserven vorbeugend ausgetauscht werden. Dies kann jedoch in vielen Fällen zu einem verfrühten Austausch der Vorrichtung führen, da die Membrankorrosion tatsächlich noch nicht so weit fortgeschritten ist, daß ein Austausch nach der vorhergesagten Zeit erforderlich ist.
   US Patent Nr. 5;215;644 offenbart einen amperomertischen Sauerstoffsensor mit einem Elektrolyten in einer Kammer, die von einer Membran verschlossen, ist. Der Zustand des Elektrolyten wird mittels zweier Elektroden überwacht von denen eine innerhalb und die andere außerhalb der Kammer angeordnet sind. Diesem Dokument ist allerdings nichts für eine Vorhersage eines Membranbruchs ohne das Risiko einer Kontamination des den Sauerstoffsensor umgebenden Mediums durch den Elektrolyten zu entnehmen.
   Es ist daher die Aufgabe der vorliegenden Erfindung eine verbesserte Vorrichtung vorzuschlagen, die eine frühzeitige Erkennung eines drohenden Membranbruchs ermöglicht.
   Erfindungsgemäß wird die Aufgabe gelöst durch die Vorrichtungen gemäß dem unabhängigen Anspruch 1. Weitere Vorteile und Gesichtspunkte ergeben sich aus den abhängigen Ansprüchen, der Beschreibung und den Zeichnungen.
   Die erfindungsgemäße Vorrichtung zur Übertragung eines Drucks von einem in einem ersten Medium vorherrschenden Druck auf ein zweites Medium, ist eine Vorrichtung mit
- einem Grundkörper;
- einer ersten Trennmembran, die mit ihrem Rand an dem Grundkörper befestigt ist, wobei die erste Trennmembran mit ihrer ersten, dem Grundkörper abgewandten Oberfläche mit dem ersten Medium in Kontakt gebracht werden kann, und mit ihrer zweiten, dem Grundkörper zugewandten Oberfläche und dem Grundkörper eine Druckkammer bildet, die mit dem zweiten Medium befüllbar ist, durch welches der Druck zu einer Druckmeßzelle übertragen werden kann; und
einen Frühwarndetektor mit
einer Sensorkammer mit einer Öffnung, die dem ersten Medium zugewandt ist;
einem Sensor, der eine Eigenschaft eines in der Sensorkammer enthaltenen Mediums überwacht; und
eine dem ersten Medium zugewandte Barriere, welche die Öffnung druckdicht verschließt, und welche bei Kontakt mit dem ersten Medium unter den gleichen Bedingungen wie die Trennmembran, eher versagt als die Trennmembran und somit eine Fließverbindung zwischen der Sensorkammer und dem ersten Medium ermöglicht.

Vorzugsweise ist die Barriere als eine Ofermembran ausgebildet.

Vorzugsweise ist die Opfermembran dünner als die Trennmembran und besteht aus dem gleichen Material. Auf diese Weise ist zu erwarten, daß bei einer korrosiven Zerstörung der Membranen die Opfermembran eher zerstört ist als die Trennmembran.

Insofern als die Verbindung zwischen einer metallischen Membran und einem metallischen Grundkörper häufig schneller korrodiert als die Membran selbst, was insbesondere bei Schweißverbindungen der Fall ist, kann das kontrolliert schnellere Versagen der Barriere auch dadurch erzielt werden, daß beispielsweise eine Schweißnaht, mit der die Opfermembran um den Rand der Sensorkammeröffnung befestigt ist, dünner ausgebildet ist als die Schweißnaht, mit der die Trennmembran am Grundkörper befestigt ist.

Schließlich kann auch durch geeignete Materialwahl erreicht werden, daß eine Opfermembran bei gleicher Materialstärke in einem bestimmten ersten Medium schneller versagt als die Trennmembran. Hierzu kann beispielsweise für die Opfermembran eine gegenüber der Trennmembran leicht veränderte Legierung eingesetzt werden.

Selbstverständlich sind die oben genannten Maßnahmen zur Kontrolle der Lebensdauer der Opfermembran im Vergleich zur Lebensdauer der Trennmembran beliebig miteinander kombinierbar.

Das Verhältnis der Lebensdauern sollte so aufeinander Abgestimmt sein, daß nach dem Versagen der Barriere eine zuverlässige Prognose über die verbleibende Lebensdauer der Trennmembran möglich ist. Hierzu sollte die Lebensdauer der Barriere zwischen 70% und 99% vorzugsweise zwischen 80% und 98% und besonders bevorzugt zwischen 85% und 95% der Lebensdauer der Trennmembran für eine bestimmtes erstes Medium betragen. Hierbei sollte die Schwankungsbreite der Lebensdauerverhähltnisse möglichst gering sein, um eine möglichst genaue Prognose zu ermöglichen.

Die Sensorkammer sollte vorzugsweise mit dem gleichen Medium gefüllt sein wie die Druckkammer. Gleichermaßen kann die Sensorkammer evakuiert sein, wodurch ein schnelleres Eindringen des ersten Mediums in die Sensorkammer nach dem Versagen der Opfermembran erfolgt.

Mit der erfindungsgemäßen Vorrichtung wird gewährleistet, daß ein bevorstehender Ausfall aufgrund des Versagens der ersten Trennmembran rechtzeitig nachweisbar ist, so daß der Austausch der Vorrichtung vorausschauend erfolgen kann, ohne einen unerwarteten Ausfall der Anlage hinnehmen zu müssen, in dem die Vorrichtung eingesetzt wird.

Vorzugsweise ist der Sensor ein Leitfähigkeitssensor, welcher die Leitfähigkeit eines Mediums in der Sensorkammer überwacht. Weiterhin kann der Sensor ein kapazitiver Sensor sein, der die relative Dielektrizitätskonstante des Mediums ermittelt.

Nach dem Auftreten eines Lecks in der Trennmembran werden die Materialeigenschaften des zweiten Mediums durch Verunreinigungen aus dem ersten Medium verändert. Insofern als die Verunreinigungen sich ohne einen Druckgradienten im wesentlichen diffusiv ausbreiten, sollte der Sensor bevorzugt höchstens so weit von der Trennmembran entfernt sein, daß die zu erwartende Diffusionszeit der Verunreinigungen von einem Leck in der Barriere bzw. der Opfermembran bis zum Sensor eine vorgegebene Zeitspanne nicht überschreitet. Um die erfindungsgemäße Vorrichtung möglichst universell einsetzen zu können, sollte das Sensorelement mit möglichst geringem Abstand zur Trennmembran angeordnet sein. Zur Beschleunigung des Nachweises einer Verunreinigung kann die Sensorkammer mit dem zweiten Medium bei einem Druck gefüllt sein, der unterhalb des Nenndruckbereichs liegt, für den die Vorrichtung ausgelegt ist. Unter diesen Bedingungen sollte beim Meßbetrieb ein Druckgradient zwischen dem ersten Medium und der Sensorkammer zu erwarten sein.

Wenn der Sensor ein Leitfähigkeitssensor ist, umfaßt er mindestens zwei voneinander beabstandete Eektroden, wobei der Raum zwischen den Elektroden mit einem Austauschmedium, insbesondere dem zweiten Medium, gefüllt ist. Der Sensor kann beispielsweise eine erste und eine zweite Elektrode aufweisen, die jeweils voneinander und gegenüber der Sensorkammer elektrisch isoliert sind, oder der Sensor kann eine erste Elektrode aufweisen, die gegenüber der Sensorkammer isoliert ist, wobei die Sensorkammer als Gegenelektrode dient. Ein kapazitiver Sensor kann die gleiche Anordnung der Elektroden wie ein Leitfähigkeitssensor aufweisen.

Die Erfindung wird nun anhand der nachfolgenden Zeichnungen näher erläutert. Es zeigt:
Fig. 1: Eine schematische Darstellung einer ersten Ausführungsform einer erfindungsgemäßen Vorrichtung.
Fig. 2: Eine zweite Ausführungsform einer erfindungsgemäßen Vorrichtung.

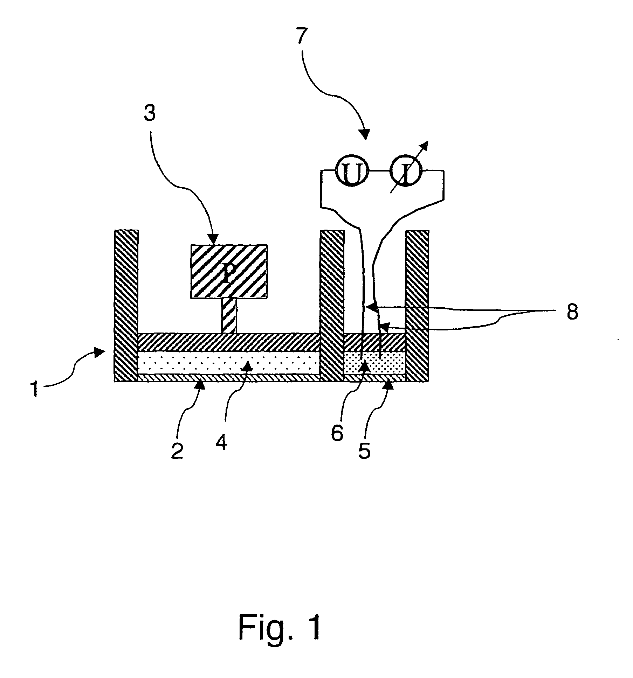

Der in Fig. 1 gezeigte Drucksensor umfaßt einen Grundkörper 1. An einer Stirnseite des Grundkörpers ist eine Trennmembran 2 mit ihrem Rand befestigt, so daß zwischen der Trennmembran 2 und dem Grundkörper eine Druckkammer 4 ausgebildet ist. Im Einsatz wird die Trennmembran auf ihrer der Druckkammer abgewandten Seite mit einem ersten Medium beaufschlagt. Die Druckkammer ist mit einem zweitem Medium, dem Übertragungsmedium, gefüllt, welches vorzugsweise ein Silikonöl ist. Das Übertragungsmedium überträgt den Druck zu einer Druckmeßzelle 3, die nach einem der dem Fachmann geläufigen Prinzipien ein druckabhängiges Meßsignal erzeugt. Dies kann beispielsweise kapazitiv, piezoresistiv, induktiv oder nach einem Resonatorprinzip erfolgen.

In der Stirnseite des Grundkörpers 1 ist neben der Trennmembran eine Opfermembran 5 angeordnet, die vorzugsweise das gleiche Material wie die Trennmembran 2 aufweist. Die Opfermembran 5 ist lediglich dünner als die Trennmembran 2, so daß ein früherer Membranbruch aufgrund von Korrosion zu erwarten ist.

Die Opfermembran trennt die Sensorkammer 6 von dem ersten Medium. In der Sensorkammer sind die Elektroden 8 des Leitfähigkeitssensors 7 angeordnet. Die

Sensorkammer ist mit einem Austauschmedium gefüllt, welches nach dem Membranbruch durch das erste Medium verunreinigt wird. Das Austauschmedium ist vorzugsweise elektrisch nicht leitend und ist weiter vorzugsweise mit der Übertragungsflüssigkeit chemisch im wesentlichen identisch. Durch Eindringen von Verunreinigungen aus einem wäßrigen ersten Medium wird ändert sich die Leitfähigkeit des Inhalts der Sensorkammer, so daß zwischen den Elektroden 8 des Leitfähigkeitssensors 7 ein anderer Widerstand gemessen wird. Die Veränderung der Leitfähigkeit signalisiert das Versagen der Opfermembran, woraus eine verbleibende Lebenserwartung für die Trennmembrann ermittelt werden kann.

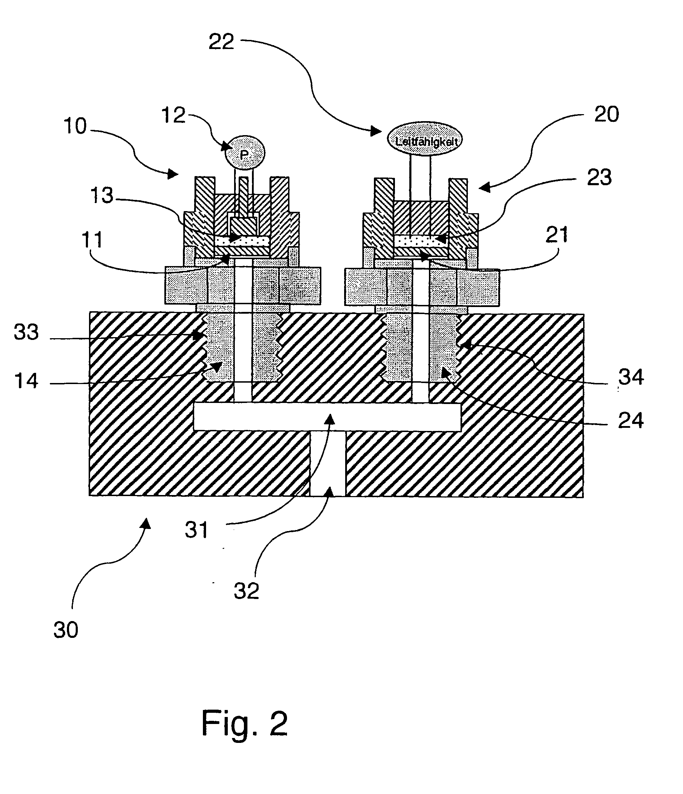

Fig. 2 zeigt eine andere Ausführungsform der vorliegenden Erfindung, bei der ein konventioneller Drucksensor 10 mit einem passenden Frühwarndetektor 20 kombiniert wird. Der Frühwarndetektor 20 hat vorzugsweise hinsichtlich Gehäusung und Prozeßanschluß einen im wesentlichen identischen Ausfbau wie der Drucksensor 10, so daß die Opfermembran 21 des Frühwarndetektors 20 praktisch in einer äquialenten Umgebung zur Umgebung einer Trennmembran 11 des Drucksensors 10 angeordnet ist. Zudem ist der Fertigungsaufwand erheblich reduziert, da konventionelle Komponenten verwendet werden können.

Der Drucksensor 10 und der Frühwarndetektor 20 umfassen jeweils einen Anschlußzapfen 14, 24 der in eine komplementäre Sensoraufnahme 33, 34 eines Verteilerblocks 30 geschraubt ist. Die zwei Sensoraufnahmen 33, 34, kommunizieren mit einer Verteilerkammer 31 die über eine Druckzuleitung 32 mit dem ersten Medium beaufschlagt wird. Die Anschlußzapfen 14, 24 weisen jeweils einen Kanal auf, durch welchen das erste Medium zu der Trennmembran 11 bzw. der Opfermembran 21 gelangt.

Wie zuvor beschrieben, dient die Opfermembran 21 als Barriere zwischen dem ersten Medium und einer Sensorkammer 23 die in dem Gehäuse des Frühwarndetektors 20 angeordnet ist. In der Sensorkammer 23 sind die Elektroden eines Leitfähigkeitssensors 22 angeordnet, der die Leitfähigkeit des in der Sensorkammer enthaltenen Mediums überwacht.

Hinsichtlich der Kontrolle der Lebenserwartung der Opfermembran 21 und der Befüllung der Sensorkammer mit einem Austauschmedium wird auf die obigen Ausführungen zu diesen Punkten verwiesen.

Schließlich wird erfindungsgemäß ein Frühwarndetektor beispielsweise in der Art des Frühwarndetektors 21 als Nachrüstgerät bereitgestellt, der als Ergänzung zu einem ausgewählten herkömmlichen Drucksensor einsetzbar ist, wobei die Lebensdauer der Barriere bzw. der Opfermembran auf die Lebensdauer des jeweiligen Drucksensors bzw. dessen Trennmembran für bestimmte erste Medien abgestimmt ist, d.h. diese unterschreitet.

Wenngleich die Erfindung anhand von Absolutdrucksensoren erläutert wurde, kann sie ebenfalls bei Relativdrucksensoren und Differenzdrucksensoren anwendung finden.

Im Einsatzgebiet von Differenzdrucksensoren ist es gelegentlich wünschenswert, zusäztlich den Absolutdruck zu kennen. Für diese Anwendungen kann ein erfindungsgemäßer Frühwarndetektor eingesetzt werden, der eine Druckmeßzelle aufweist, die über das in der Sensorkammer enthaltene Austauschmedium mit dem Absolutdruck beaufschlagt wird.

### Bezugszeichenliste

1 Grundkörper
2 Trennmembran
3 Druckmeßzelle
4 Druckkammer
5 Opfermembran
6 Sensorkammer
7 Leitfähigkeitssensor
8 Elektroden
10 Drucksensor
11 Trennmembran
12 Druckmeßzelle
13 Druckkammer
14 Anschlußzapfen
20 Frühwarndetektor
21 Opfermembran
22 Leitfähigkeitssensor
23 Sensorkammer
24 Anschlußzapfen
30 Verteilerblock
31 Verteilerkammer
32 Druckzuleitung
33 Erste Sensoraufnahme
34 Zweite Sensoraufnahme

## Patentansprüche

1. Vorrichtung zur Übertragung eines in einem ersten Medium vorherrschenden Drucks auf ein zweites Medium, mit
- einem Grundkörper (1);
- einer Trennmembran (2), die mit ihrem Rand an dem Grundkörper befestigt ist, wobei die erste Trennmembran mit ihrer ersten, dem Grundkörper abgewandten Oberfläche mit dem ersten Medium in Kontakt gebracht werden kann, und mit ihrer zweiten, dem Grundkörper zugewandten Oberfläche und dem Grundkörper eine Druckkammer bildet, die mit dem zweiten Medium befüllbar ist, durch welches der Druck zu einer Druckmeßzelle übertragen werden kann; und
- einem Frühwarndetektor mit
einer Sensorkammer (6) mit einer Öffnung, die dem ersten Medium zugewandt ist;
einem Sensor (7), der eine Eigenschaft eines in der Sensorkammer enthaltenen Mediums überwacht; und
eine dem ersten Medium zugewandte Barriere (5), welche die Öffnung druckdicht verschließt, und welche bei Kontakt mit dem ersten Medium unter den gleichen Bedingungen wie die Trennmembran (2) eher versagt als die Trennmembran und somit eine Fließverbindung zwischen der Sensorkammer (6) und dem ersten Medium ermöglicht.

2. Vorrichtung nach Anspruch 1, wobei der Sensor (7) ein Leitfähigkeitssensor oder ein kapazitiver Sensor ist.

3. Vorrichtung nach Anspruch 1 oder 2, wobei die Barriere eine Ofermembran (2;21) aufweist.

4. Vorrichtung nach Anspruch 3, wobei die Opfermembran (5; 21) dünner als die Trennmembran (2; 11) ist.

5. Vorrichtung nach Anspruch 3 oder 4, wobei die Opfermembran und die Trennmembran jeweils mit einer Schweißnaht befestigt sind, und die Schweißnaht der Opfermembran bei einem vorgegebenen ersten Medium eher versagt als die Schweißnaht der Trennmembran.

6. Vorrichtung nach einem der vorhergehenden Ansprüche, wobei die Barriere ein anderes Material aufweist als die Trennmembran.

7. Vorrichtung nach einem der vorhergehenden Ansprüche, wobei die Lebensdauer der Barriere zwischen 70% und 99% vorzugsweise zwischen 80% und 98% und besonders bevorzugt zwischen 85% und 95% der Lebensdauer der Trennmembran für ein bestimmtes erstes Medium beträgt.

8. Vorrichtung nach einem der vorhergehenden Ansprüche, wobei die Sensorkammer (6) evakuiert ist.

## Claims

1. Unit for transferring a pressure in a first medium to a second medium with:
- a meter body (1);
- a process isolating diaphragm (2) whose edge is attached to the meter body, whereby the first process isolating diaphragm can be brought into contact with the first medium with its first surface, which faces away from the meter body, and forms a pressure chamber with the meter body and its second surface, which faces towards the meter body. Said chamber can be filled with the second medium by means of which the pressure can be transferred to a pressure measuring cell; and
- an early warning detector with
a sensor chamber (6) with an opening, which faces towards the first medium;
a sensor (7) that monitors a property of a medium in the sensor chamber; and
a barrier (5) that faces towards the first medium and seals the opening pressure-tight, and which, in the event of contact with the first medium under the same conditions as the process isolating diaphragm (2), fails before the process isolating diaphragm, thereby allowing a flow connection between the sensor chamber (6) and the first medium.

2. Unit as per Claim 1, where the sensor (7) is a conductivity sensor or a capacitance sensor.

3. Unit as per Claim 1 or 2, whereby the barrier exhibits a sacrificial diaphragm (2; 21)

4. Unit as per Claim 3, where the sacrificial diaphragm (5; 21) is thinner than the process isolating diaphragm (2; 11)

5. Unit as per Claim 3 or 4, where the sacrificial diaphragm and the process isolating diaphragm are each secured by a welded seam, and, with a prespecified first medium, the welded seam of the sacrificial membrane fails before the welded seam of the process isolating membrane.

6. Unit as per one of the previous claims, whereby the barrier exhibits a different material to the process isolating diaphragm.

7. Unit as per one of the previous claims, whereby the service life of the barrier is between 70% and 99%, preferably between 80% and 98% and most preferably between 85% and 95% of the service life of the process isolating diaphragm for a specific first medium.

8. Unit as per one of the previous claims, whereby the sensor chamber (6) is evacuated.

## Revendications

1. Dispositif destiné à la transmission d'une pression régnant dans un premier produit vers un deuxième produit, avec
- un corps de base (1) ;
- une membrane de séparation (2), dont le bord est fixé au corps de base, la membrane de séparation pouvant être amenée avec sa première surface - opposée au corps de base - en contact avec le premier produit, et formant une chambre de pression avec sa deuxième surface - faisant face au corps de base - et le corps de base, chambre qui peut être remplie par le deuxième produit, à travers lequel la pression peut être transmise vers une cellule de mesure de pression ; et
- un détecteur d'alerte rapide avec
une chambre de capteur (6) avec une ouverture, qui fait face au premier produit ;
un capteur (7),qui surveille une propriété d'un produit contenu dans la chambre de capteur ; et
une barrière (5) faisant face au premier produit, laquelle obture l'ouverture de façon étanche à la pression, et qui, en cas de contact avec le premier produit dans les mêmes conditions que la membrane de séparation (2), cède avant la membrane de séparation et permet ainsi un écoulement entre la chambre de capteur (6) et le premier produit.

2. Dispositif selon la revendication 1, pour lequel le capteur (7) est un capteur de conductivité ou un capteur capacitif.

3. Dispositif selon la revendication 1 ou 2, pour lequel la barrière présente une membrane sacrificielle (2, 21).

4. Dispositif selon la revendication 3, pour lequel la membrane sacrificielle (5, 21) est d'épaisseur inférieure à la membrane de séparation (2, 11).

5. Dispositif selon la revendication 3 ou 4, pour lequel la membrane sacrificielle et la membrane de séparation sont chacune fixées avec un cordon de soudure, et où le cordon de soudure de la membrane sacrificielle pour un premier produit prédéfini cède avant le cordon de soudure de la membrane de séparation.

6. Dispositif selon l'une des revendications précédentes, pour lequel la barrière se compose d'un autre matériau que celui de la membrane de séparation.

7. Dispositif selon l'une des revendications précédentes, pour lequel la durée de vie de la barrière se situe entre 70 et 99 %, de préférence entre 80 et 98 % et particulièrement de préférence entre 85 et 95 % de la durée de vie de la membrane de séparation pour un premier produit déterminé.

8. Dispositif selon l'une des revendications précédentes, pour lequel la chambre de capteur (6) est évacuée.
